# EUROPÄISCHE PATENTANMELDUNG

(11) **EP 3 837 958 A1**
(43) Veröffentlichungstag der Anmeldung: **23.06.2021**
(21) Anmeldenummer: 20200683.9
(22) Anmeldetag: 08.10.2020
(51) Int. Cl.: A01D 41/127, A01D 43/08, F02D 41/14

(54) **VERFAHREN ZUM ANTREIBEN EINER LANDWIRTSCHAFTLICHEN ARBEITSMASCHINE**

(30) Priorität: 19.12.2019 DE 102019135214
(71) Anmelder: CLAAS Selbstfahrende Erntemaschinen GmbH, 33428 Harsewinkel (DE)
(72) Erfinder: Hugenroth, Ludger, 33428 Harsewinkel (DE); Terörde, Stefan, 48231 Warendorf (DE); Hohm, Robert, 48231 Warendorf (DE); Bussmann, Christoph, 33428 Harsewinkel (DE)
(74) Vertreter: CLAAS Gruppe

(57) **Zusammenfassung**

Offenbart ist ein Verfahren zum Antreiben einer landwirtschaftlichen Arbeitsmaschine mit einem Fahrantrieb und Aggregaten mittels einer Kraftmaschine, wobei in unterschiedlichen Betriebsmodi der Arbeitsmaschine der Fahrantrieb und die Aggregate in unterschiedlichen Kombinationen jeweils angetrieben oder antriebslos sind, die Aggregate in einem begrenzten Drehzahlbereich (12) der Kraftmaschine angetrieben werden, und die Kraftmaschine lastabhängig zwischen einer Volllaststufe mit maximaler Leistung und einer Mehrzahl von Teillaststufen mit gegenüber der Volllaststufe stufenweise reduzierter Leistung umgeschaltet wird.

Um die Aggregate vor Überlast zu schützen wird erfindungsgemäß vorgeschlagen, dass die Kraftmaschine nur in einem Volllastmodus auf die Volllaststufe und in jedem anderen der Betriebsmodi nur auf Teillaststufen umschaltbar ist.

## Beschreibung

Die Erfindung betrifft ein Verfahren zum Antreiben einer landwirtschaftlichen Arbeitsmaschine mit einem Fahrantrieb und Aggregaten mittels einer Kraftmaschine, wobei in unterschiedlichen Betriebsmodi der Arbeitsmaschine der Fahrantrieb und die Aggregate in unterschiedlichen Kombinationen jeweils angetrieben oder antriebslos sind, die Aggregate in einem begrenzten Drehzahlbereich der Kraftmaschine angetrieben werden, und die Kraftmaschine lastabhängig zwischen einer Volllaststufe mit maximaler Leistung und einer Mehrzahl von Teillaststufen mit gegenüber der Volllaststufe stufenweise reduzierter Leistung umgeschaltet wird.

Landwirtschaftliche Arbeitsmaschinen sind beispielsweise Mähdrescher, Feldhäcksler oder Schlepper mit Anbauten wie Düngerstreuer, Sämaschinen, Spritzeinrichtungen, Wender oder Schwader. In solchen Arbeitsmaschinen laufen viele Arbeitsabläufe ganz oder teilweise automatisiert ab, unter anderem der Betrieb und die Steuerung eines Großteils der Aggregate der Arbeitsmaschine. Aggregate sind die landwirtschaftliche Arbeit unterstützende oder verrichtende und dadurch Leistung verbrauchende Komponenten der Arbeitsmaschine, beispielsweise ein Erntevorsatz wie Haspel oder Schneidwerk oder das Fronthubwerk zum Anheben und Absenken solcher Vorsatzgeräte, ein Abscheideaggregat, eine Dreschtrommel, ein Reinigungsgebläse, eine Schwadablage, ein Häcksler oder eine Korntankentleerung.

Die Kraftmaschine einer solchen Arbeitsmaschine ist insbesondere ein Dieselmotor als gemeinsamer Antrieb für die Aggregate und den Fahrantrieb. Die von der Kraftmaschine abgegebene Leistung wird also zu einem Teil dem Fahrantrieb und zu einem anderen Teil den im jeweils aktuellen Betriebsmodus angetriebenen Aggregaten zugeführt. Da der Leistungsbedarf eines Aggregats beispielsweise während der Ernte variiert, wird die von der Kraftmaschine abgegebene Leistung automatisch angepasst. Die jeweils bis zu der maximalen Leistung der Kraftmaschine verfügbare Differenz steht für den Fahrantrieb zur Verfügung.

Die Aggregate einer solchen Arbeitsmaschine werden typischer Weise unmittelbar über die Kraftmaschine angetrieben und beschränken damit deren Drehzahlbereich. Die Kraftmaschine ist in verschiedenen Laststufen betreibbar ist, in denen sie jeweils eine andere Leistungskennlinie hat. Die Laststufen, die infinitesimal klein sein können, unterscheiden sich jeweils im Verlauf der Leistung abhängig von der Drehzahl der Abtriebswelle der Kraftmaschine und insbesondere in der von der Kraftmaschine abgebbaren Maximalleistung.

Die Volllaststufe ist die im Betrieb vom Anwender wählbare Laststufe, in der der Motor die höchste Leistung abgibt. Die Motorleistung in der Volllaststufe entspricht dabei nicht zwingend der technisch möglichen Maximalleistung des Motors, sondern kann gezielt niedriger gewählt ("gedrosselt") werden. Allgemein bekannt sind Arbeitsmaschinen mit in der Volllaststufe mechanisch oder durch die Steuerungssoftware gedrosselter Motorleistung, um Verbrauch und/oder Verschleiß zu optimieren. Weiterhin ist es bekannt, die Leistung in der Volllaststufe durch Eingriff in die Steuerungssoftware vorübergehend oder dauerhaft zu verändern.

Die Kraftmaschine wird mittels einer Regeleinrichtung zwischen den Laststufen beispielsweise mittels eines Getriebes umgeschaltet, oder auch durch Änderung der Einspritzmenge oder Veränderung des Kraftstoffgemisches, insbesondere des Verbrennungsluftverhältnisses. Das Umschalten in eine höhere oder niedrigere Laststufe erfolgt automatisch, wenn die geforderte Leistungsänderung innerhalb der gewählten Laststufe den zulässigen Drehzahlbereich über- oder unterschreiten würde.

EP 3 259 975 A1 schlägt im Rahmen eines Verfahrens zum Antreiben einer solchen Arbeitsmaschine vor, die Laststufen zu gruppieren und das Umschalten zwischen Laststufen nur innerhalb einer Gruppe zuzulassen, um den Kraftstoffverbrauch und die Schadstoffemissionen der Arbeitsmaschine zu senken.

In den bekannten Arbeitsmaschinen kann die volle Motorleistung nicht in den Aggregaten genutzt werden. Einige Antriebe können nicht permanent die volle Motorleistung übertragen. Das Antriebskonzept muss daher mit hohem Aufwand auf die hohe Motorleistung angepasst werden. Eine erhöhte Motorleistung kann vielfach nicht genutzt werden.

### Aufgabe

Der Erfindung liegt die Aufgabe zugrunde, die Aggregate vor Überlast zu schützen.

### Lösung

Ausgehend von dem bekannten Verfahren wird nach der Erfindung vorgeschlagen, dass die Kraftmaschine nur in einem Volllastmodus auf die Volllaststufe und in jedem anderen der Betriebsmodi nur auf Teillaststufen umschaltbar ist. Dabei wird die maximale Motorleistung in Abhängigkeit der arbeitenden Aggregate so begrenzt, dass die Antriebe nicht überlastet werden. In dem Volllastmodus wird mindestens eines der Aggregate angetrieben. Typischer Weise handelt es sich hierbei um Aggregate, die einen hohen Leistungsbedarf aufweisen, beispielsweise Abscheideaggregat, Schwadablage, Häcksler oder Korntankentleerung. Die Fahrgeschwindigkeit muss dann nicht reduziert werden, wenn Aggregate zugeschaltet werden, wie es beim Überladen notwendig ist.

Die Regelung der Kraftmaschine entlang eines engen Drehzahlbandes ist beim Mähdrescher besonders vorteilhaft, da die Dresch- und Reinigungsaggregate direkt an die Motordrehzahl gekoppelt sind und sich eine konstante Drehzahl positiv auf das Arbeitsergebnis auswirkt.

Vorzugsweise werden in einem erfindungsgemäßen Verfahren im Volllastmodus zwei der Aggregate angetrieben. Der Volllastmodus zeichnet sich dann durch den gleichzeitigen Betrieb von zwei Aggregaten, beispielsweise Häcksler und Korntankentleerung aus.

Vorzugsweise ist in einem erfindungsgemäßen Verfahren die Kraftmaschine nur im Volllastmodus und in mindestens einem Hochlastmodus in eine Hochlaststufe aus den Teillaststufen umschaltbar. Eine solche Hochlaststufe unterhalb der Volllast erlaubt gleichfalls das Zuschalten der zuordneten Aggregate bei unverminderter Fahrgeschwindigkeit, behält aber die Leistungsreserve für den Volllastmodus bei.

Vorzugsweise ist in einem erfindungsgemäßen Verfahren die Arbeitsmaschine ein Mähdrescher und umfassen die Aggregate einen Erntevorsatz, eine Dreschtrommel, ein Abscheideaggregat, ein Reinigungsgebläse, eine Schwadablage, einen Häcksler und/oder eine Korntankentleerung. Solche Arbeitsmaschinen und Aggregate für dieselben sind allgemein bekannt. Das Abscheideaggregat kann als Schüttler oder als Rotorabscheidung ausgeführt sein. Insbesondere die Rotorabscheidung weist einen hohen Leistungsbedarf auf.

Vorzugsweise wird in einem erfindungsgemäßen Verfahren eine Fahrgeschwindigkeit des Fahrantriebs abhängig von einem mit Arbeitsmaschine (1) geernteten Erntegut gesteuert. Parameter des Ernteguts, die die Wahl der Fahrgeschwindigkeit beeinflussen, sind insbesondere Erntegutart, -feuchte,-struktur und -dichte sowie Erntegutmenge und -durchsatz, aber auch die Kontur und Querschnittsfläche des Schwades.

Vorzugsweise wird in einem erfindungsgemäßen Verfahren die Fahrgeschwindigkeit abhängig von der Kraftmaschine, vom Fahrantrieb und/oder von mindestens einem der angetriebenen Aggregate gesteuert. Parameter der Kraftmaschine, des Fahrantriebs und der Aggregate, die die Wahl der Fahrgeschwindigkeit beeinflussen, sind insbesondere das maximale Drehmoment und maximale Leistung der Kraftmaschine, Drehmoment und Drehzahl der Aggregate, insbesondere der Häckseltrommel, Schluckvolumen und Druck eines hydraulischen Wandlers, der Kraftstoffdurchsatz und die Kühlmitteltemperatur eines Verbrennungsmotors. Die begrenzte maximale Motorleistung wird dem Vorfahrtregler mitgeteilt, sodass dieser die Fahrgeschwindigkeit auf einen Wert regelt, an dem die begrenzte maximale Motorleistung genutzt wird.

Vorzugsweise weist in einem erfindungsgemäßen Verfahren die Kraftmaschine einen Verbrennungsmotor und weiter vorzugsweise einen hydrostatischen Wandler auf. Arbeitsmaschinen mit Verbrennungsmotoren und insbesondere mit hydrostatischem Wandler sind allgemein bekannt.

### Ausführungsbeispiel

Die Erfindung wird nachstehend anhand eines Ausführungsbeispiels näher erläutert. Die Figuren zeigen in
- Fig. 1:: eine erfindungsgemäße Arbeitsmaschine,
- Fig. 2:: einen Schnitt durch den Rahmen.

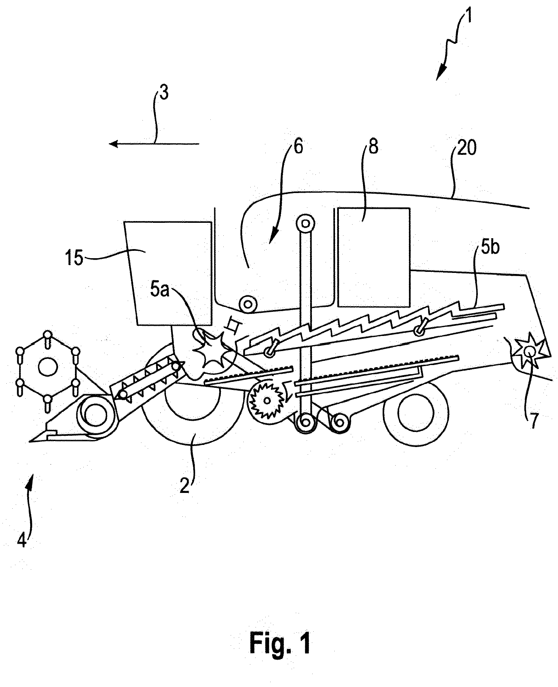

Figur 1 zeigt eine erfindungsgemäße landwirtschaftliche Arbeitsmaschine 1 in Form eines Mähdreschers (nach Hans Wastlhuber, Wikimedia Commons). Die Arbeitsmaschine 1 wird mittels eines Fahrantriebs 2 in einer Fahrtrichtung 3 angetrieben. Ein nicht dargestellter Gutfluss aus Pflanzenteilen wird dabei in einem Erntevorsatz 4 eingezogen und über eine Dreschtrommel 5a in ein Abscheideaggregat 5b - hier: einen Hordenschüttler - geführt. Das Korn wird in einen Korntank 6 abgelagert und das ausgedroschene Stroh durch einen Häcksler 7 abgeführt. Eine nicht im Detail dargestellte Kraftmaschine 8 in Form eines Dieselaggregats mit einem nachgeschalteten hydrostatischen Wandler treibt die Aggregate und den Fahrantrieb 2 an.

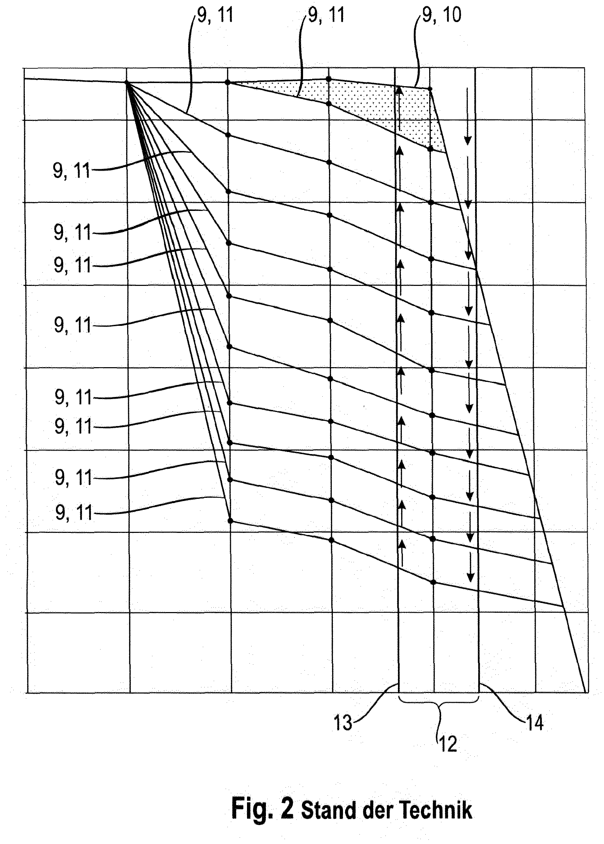

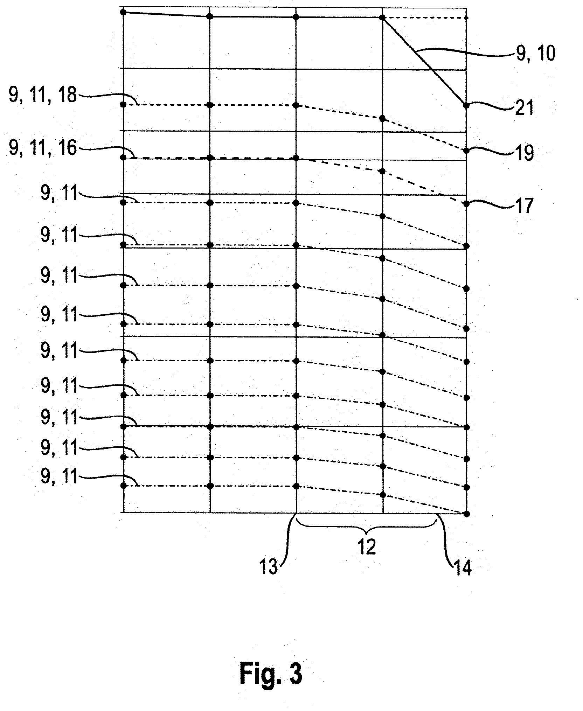

Die Kraftmaschine 8 ist in verschiedene Laststufen schaltbar, die sich durch die Höhe der Leistung unterscheiden, die die Kraftmaschine 8 abhängig von der Drehzahl abgibt. Die in den Figuren 2 und 3 dargestellten Leistungskennlinien beschreiben den Verlauf der Leistung relativ zur Drehzahl für die jeweiligen Laststufen.

Die weiteren Figuren zeigen jeweils eine Schar von im Wesentlichen parallel verlaufenden Leistungskennlinien 9 einer Kraftmaschine 8, die die Arbeitsmaschine gemäß einem aus dem Stand der Technik bekannten (Figur 2) und gemäß einem erfindungsgemäßen Verfahren (Figur 3) antreibt. Die Figuren zeigen jeweils eine Volllastkennlinie 10 der Volllaststufe, in der die Kraftmaschine 8 die maximale Leistung von bis zu 581 *kW* abgibt und mehrere Teillastkennlinien 11 der Teillaststufen, in denen die Kraftmaschine 8 abgestuft jeweils eine geringere Leistung abgibt.

In einem begrenzten Drehzahlbereich 12 zwischen einer Mindestdrehzahl 13 von 1700 und einer Höchstdrehzahl 14 von 1879 *rpm* wird die Kraftmaschine 8 jeweils abhängig vom tatsächlichen Leistungsbedarf des Fahrantriebs 2 und der Aggregate zwischen den Laststufen umgeschaltet. Eine nicht dargestellte Regeleinrichtung stellt sicher, dass die Fahrgeschwindigkeit des Fahrantriebs 2 konstant bleibt: Steigt der Leistungsbedarf der Aggregate und sinkt daher die Drehzahl der Kraftmaschine 8 unter die Mindestdrehzahl 13, dann schaltet die Regeleinrichtung automatisch in die nächst höhere Laststufe, sinkt der Leistungsbedarf und steigt die Drehzahl über die Höchstdrehzahl 14, schaltet sie in die nächst niedrigere Laststufe umgeschaltet. Die Drehzahl der Kraftmaschine 8 wird kontinuierlich von einem Drehzahlsensor ermittelt und einem nicht dargestellten Fahrer der Arbeitsmaschine 1 in der Fahrerkabine 15 angezeigt.

Nach dem erfindungsgemäßen Verfahren stehen neun der Teillaststufen in allen Betriebsmodi der Arbeitsmaschine zur Verfügung. Eine erste Hochlaststufe mit einer Hochlastkennlinie 16 ausgehend von einer Mindestleistung 17 von 475 *kW* ist nur in Betriebsmodi schaltbar, in denen eine (nicht dargestellte) Schwadablage angetrieben wird. Eine zweite Hochlaststufe mit einer Hochlastkennlinie 18 ausgehend von einer Mindestleistung 19 von 505 *kW* ist nur in Betriebsmodi schaltbar, in denen entweder der Häcksler 7 oder eine Korntankentleerung 20 angetrieben werden. Die Volllaststufe mit der Volllastkennlinie 10 ausgehend von einer Mindestleistung 21 von 530 *kW* ist nur in einem Betriebsmodus schaltbar, in dem der Häcksler 7 und die Korntankentleerung 20 zugleich angetrieben werden.

### Bezugszeichenliste

- 1: Arbeitsmaschine
- 2: Fahrantrieb
- 3: Fahrtrichtung
- 4: Erntevorsatz
- 5a: Dreschtrommel
- 5b: Abscheideaggregat
- 6: Korntank
- 7: Häcksler
- 8: Kraftmaschine
- 9: Leistungskennlinie
- 10: Volllastkennlinie
- 11: Teillastkennlinie
- 12: Drehzahlbereich
- 13: Mindestdrehzahl
- 14: Höchstdrehzahl
- 15: Fahrerkabine
- 16: Hochlastkennlinie
- 17: Mindestleistung
- 18: Hochlastkennlinie
- 19: Mindestleistung
- 20: Korntankentleerung
- 21: Mindestleistung

## Patentansprüche

1. Verfahren zum Antreiben einer landwirtschaftlichen Arbeitsmaschine (1) mit einem Fahrantrieb (2) und Aggregaten mittels einer Kraftmaschine (8), wobei in unterschiedlichen Betriebsmodi der Arbeitsmaschine der Fahrantrieb (2) und die Aggregate in unterschiedlichen Kombinationen jeweils angetrieben oder antriebslos sind, die Aggregate in einem begrenzten Drehzahlbereich (12) der Kraftmaschine (8) angetrieben werden, und die Kraftmaschine (8) lastabhängig zwischen einer Volllaststufe mit maximaler Leistung und einer Mehrzahl von Teillaststufen mit gegenüber der Volllaststufe stufenweise reduzierter Leistung umgeschaltet wird, **dadurch gekennzeichnet, dass** die Kraftmaschine (8) nur in einem Volllastmodus auf die Volllaststufe und in jedem anderen der Betriebsmodi nur auf Teillaststufen umschaltbar ist.

2. Verfahren nach dem vorgenannten Anspruch, **dadurch gekennzeichnet, dass** im Volllastmodus zwei der Aggregate angetrieben werden.

3. Verfahren nach einem der vorgenannten Ansprüche, **dadurch gekennzeichnet, dass** die Kraftmaschine (8) nur im Volllastmodus und in mindestens einem Hochlastmodus in eine Hochlaststufe aus den Teillaststufen umschaltbar ist.

4. Verfahren nach einem der vorgenannten Ansprüche, **dadurch gekennzeichnet, dass** die Arbeitsmaschine ein Mähdrescher ist und die Aggregate einen Erntevorsatz (4), eine Dreschtrommel (5a), ein Abscheideaggregat (5b), ein Reinigungsgebläse, eine Schwadablage, einen Häcksler (7) und/oder eine Korntankentleerung (20) umfassen.

5. Verfahren nach einem der vorgenannten Ansprüche, **dadurch gekennzeichnet, dass** eine Fahrgeschwindigkeit des Fahrantriebs (2) abhängig von einem mit Arbeitsmaschine (1) geernteten Erntegut gesteuert wird.

6. Verfahren nach dem vorgenannten Anspruch, **dadurch gekennzeichnet, dass** die Fahrgeschwindigkeit abhängig von der Kraftmaschine (8), vom Fahrantrieb (2) und/oder von mindestens einem der angetriebenen Aggregate gesteuert wird.

7. Verfahren nach einem der vorgenannten Ansprüche, **dadurch gekennzeichnet, dass** die Kraftmaschine (8) einen Verbrennungsmotor aufweist.

8. Verfahren nach dem vorgenannten Anspruch, **dadurch gekennzeichnet, dass** die Kraftmaschine (8) einen hydrostatischen Wandler aufweist.
